# EUROPEAN PATENT SPECIFICATION

(11) **EP 3 861 684 B1**
(45) Date of publication and mention of the grant of the patent: **03.04.2024**
(21) Application number: 18936094.4
(22) Date of filing: 05.10.2018
(51) Int. Cl.: H04L 41/5051, H04W 12/06, H04W 16/14, H04W 76/11, H04W 76/12

(54) **CROSS-DOMAIN CONTROL PLANE COLLABORATION FOR END-TO-END SRV6 SLA CONSTRAINED SERVICE DELIVERY**
DOMÄNENÜBERGREIFENDE STEUEREBENEN-ZUSAMMENARBEIT FÜR END-ZU-END-SRV6-SLA-BESCHRÄNKTE DIENSTBEREITSTELLUNG
COLLABORATION DE PLAN DE COMMANDE DE DOMAINES CROISÉS DESTINÉE À UNE DISTRIBUTION DE SERVICE CONTRAINTE SRV6 SLA DE BOUT EN BOUT

(43) Date of publication of application: 11.08.2021
(73) Proprietor: Cisco Technology, Inc., San Jose, CA 95134 (US)
(72) Inventor: PIGNATARO, Carlos, M., San Jose, CA 95134 (US); NAINAR, Nagendra, Kumar, San Jose, CA 95134 (US); GUNDAVELLI, Sri, San Jose, CA 95134 (US); MURTHY, Shree, San Jose, CA 95134 (US)
(74) Representative: Kilburn & Strode LLP
(86) International application number: PCT/US2018/054719
(87) International publication number: WO 2020/072079

(56) References cited:
- WO-A1-2017/172681
- US-A1- 2014 169 370
- US-A1- 2017 063 699
- US-A1- 2017 063 699
- US-A1- 2017 064 717
- US-A1- 2017 064 717
- US-A1- 2017 109 450
- US-A1- 2017 230 274
- FILSFILS C ET AL: "Segment Routing Architecture; rfc8402.txt", SEGMENT ROUTING ARCHITECTURE; RFC8402.TXT, INTERNET ENGINEERING TASK FORCE, IETF; STANDARD, INTERNET SOCIETY (ISOC) 4, RUE DES FALAISES CH- 1205 GENEVA, SWITZERLAND, 25 July 2018 (2018-07-25), pages 1-32, XP015126362, [retrieved on 2018-07-25]
- Dan Hutchins: "Introduction to Segment Routing - BRKRST-1124", Ciscolive!, Melbourne, Australia, 9 March 2018 (2018-03-09), pages 1-78, XP055530339, Retrieved from the Internet: URL:https://clnv.s3.amazonaws.com/2018/anz /pdf/BRKRST-1124.pdf [retrieved on 2018-12-05]
- FARREL J DRAKE JUNIPER NETWORKS A: "Interconnection of Segment Routing Domains - Problem Statement and Solution Landscape; draft-farrel-spring-sr-domain-interconnect -00.txt", INTERCONNECTION OF SEGMENT ROUTING DOMAINS - PROBLEM STATEMENT AND SOLUTION LANDSCAPE; DRAFT-FARREL-SPRING-SR-DOMAIN-INTERCONNECT -00.TXT; INTERNET-DRAFT: SPRING WORKING GROUP, INTERNET ENGINEERING TASK FORCE, IETF; STANDARDWORKINGDRAFT, INTERNET SOCI, 30 June 2017 (2017-06-30), pages 1-32, XP015120505, [retrieved on 2017-06-30]
- MATSUSHIMA SOFTBANK C FILSFILS M KOHNO P CAMARILLO CISCO SYSTEMS S ET AL: "Segment Routing IPv6 for Mobile User Plane; draft-ietf-dmm-srv6-mobile-uplane-02.txt", SEGMENT ROUTING IPV6 FOR MOBILE USER PLANE; DRAFT-IETF-DMM-SRV6-MOBILE-UPLANE-02.TXT; INTERNET-DRAFT: DMM WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZER, no. 2, 2 July 2018 (2018-07-02), pages 1-26, XP015127425, [retrieved on 2018-07-02]
- FILSFILS et al.: "Segment Routing Architecture; rfc8402.txt", Engineering Task Force, IETF, 25 July 2018 (2018-07-25), pages 1-32, XP015126362, Geneva, Switzerland
- Dan Hutchins: "Introduction to Segment Routing - BRKRST-1124", Ciscolive, 9 March 2018 (2018-03-09), pages 1-78, XP055530339, Retrieved from the Internet: URL:https://clnv.s3.amazonaws.com/2018/anz /pdf/BRKRST-1124.pdf
- FARREL et al.: "Interconnection of Segment Routing Domains - Problem Statement and Solution Landscape, draft-farrel-spring-sr-domain-interconnect -OO", Engineering Task Force, IETF, 30 June 2017 (2017-06-30), pages 1-32, XP015120505, Spring working group

## Description

### TECHNICAL FIELD

The present technology pertains to segment routing, and more specifically to implementing segment routing in a 5G network environment without the need for tunneling.

### BACKGROUND

Segment Routing for IPv6 (SRv6) is a source routing technique that allows a packet to be steered through an explicit path or ordered list of segments in a network. This is achieved via the insertion of a Segment Routing Header (SRH) into an IPv6 packet, wherein the SRH contains sufficient information to specify the sequence of on-path routers that should be traversed in order to steer the packet through the desired explicit path. Within the SRH, the explicit path information comprises an ordered set of instructions, wherein each instruction is referred to as a segment and has its own segment ID (SID). This ordered set of instructions can be encoded as a label stack, with each label representing one particular segment and the MPLS label values carrying the corresponding SIDs. In this manner, an MPLS-enabled (Multiprotocol Label Switching) network can process the SRH without needing to store additional state information on all of the routers along the desired path.

Unlike previous source routing techniques, SRv6 assigns the responsibility of creating the explicit path information to an ingress router - previous source routing techniques relied upon the sending host to encode an explicit path for a packet, meaning that a malicious actor could gain access to a private network given sufficient knowledge of which routers to traverse in order to reach the target. However, conventional proposals for implementing SRv6 in a mobile user-plane do not make use of an ingress router (edge node) to insert the SRH, and instead rely upon an on-path node such as a gNB (e.g., found in fifth-generation (5G) mobile networks) to insert the SRH. As an additional complicating factor, the base IPv6 specifications (RFC 8200) disallow an on-path node from inserting an SRH into a received packet without first encapsulating the received packet in a new IPv6 packet with the on-path node itself as the source. Consequently, conventional proposals for implementing SRv6 in the mobile user-plane must therefore rely upon tunneling.

US 2017/063699 A1 discloses, according to its abstract, an apparatus for configuring multi-paths that are made by means of MPTCP using a segment list which determine and configure a network path so as to minimize a difference in capability between paths in configuring the multi-paths.

Filsfils C et al "Segment Routing Architecture", Internet Engineering Task Force, IETF; Standard, Internet Society (ISOC), 25 July 2018, pages 1-32, describes a mechanism that allows a flow to be restricted to a specific topological path, while maintaining per-flow state only at ingress nodes to the segment routing domain.

US 2017/064717 A1 discloses utilizing the systems disclosed herein, a network element (in a network) controls, within another network, the constraints of a service, timing of the creation of the service, and selection a service on which a packet is transmitted.

Dan Hutchins: "Introduction to Segment Routing - BRKRST - 1124", Ciscolivel, Melbourne, Australia, 9 March 2018 (2018-03-09), pages 1-78, describes an overview of segment routing technology in the context of software defined networking.

Farrel J Drake Juniper Networks A: "Interconnection of Segment Routing Domains - Problem Statement and Solution Landscape", Spring Working Group, Internet Engineering Task Force, IETF; Internet SOCI, 30 June 2017, pages 1-32, describe a mechanism for providing connectivity between SR domains to enable end-to-end traffic engineering.

Matsushima et al, in "Segment Routing IPv6 for Mobile User Plane" DMM Working Group, Internet Engineering Task Force, IETF; Internet Society (ISOC) 4, no.2, 2 July 2018, pages 1-26, describes the applicability of SRv6 to the user-plane of mobile networks, and seeks to eliminate the necessity of tunnels, such as GTP-U, PMIP etc.

### BRIEF DESCRIPTION OF THE DRAWINGS

In order to describe the manner in which the above recited and other advantages and features of the disclosure can be obtained, a more particular description of the principles briefly described above will be rendered by reference to specific embodiments thereof which are illustrated in the appended drawings. Understanding that these drawings depict only example embodiments of the disclosure and are not therefore to be considered to be limiting of its scope, the principles herein are described and explained with additional specificity and detail through the use of the accompanying drawings in which:
FIG. 1 illustrates an example diagram and process flow of an example end-to-end SRv6 service delivery in a 5G mobile network environment according to one or more aspects of the present disclosure;
FIG. 2 illustrates an example diagram and process flow of an example end-to-end SRv6 service delivery in a 5G Software Defined Access (SDA) environment according to one or more aspects of the present disclosure;
FIG. 3 illustrates an example method according to aspects of the present disclosure;
FIG. 4 illustrates an example network device upon which one or more aspects of the present disclosure may be provided; and
FIG. 5 illustrates an example computing system architecture upon which one or more aspects of the present disclosure may be provided.

### DESCRIPTION OF EXAMPLE EMBODIMENTS

Various embodiments of the disclosure are discussed in detail below. While specific implementations are discussed, it should be understood that this is done for illustration purposes only. A person skilled in the relevant art will recognize that other components and configurations may be used without parting from the scope of the disclosure. Thus, the following description and drawings are illustrative and are not to be construed as limiting the scope of the embodiments described herein. Numerous specific details are described to provide a thorough understanding of the disclosure. However, in certain instances, well-known or conventional details are not described in order to avoid obscuring the description.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

Disclosed are systems and methods for SRv6 (Segment Routing for IPv6) service delivery in end-to-end fashion with collaboration across different control planes of a fifth-generation (5G) environment. A registration request is transmitted to a first control plane element of the 5G environment, where the registration request specifies one or more requested services within the 5G environment. In some embodiments, the registration request comprises (or is replaced by) an access authentication/NAS signaling message. For each service, one or more associated service requirements are determined and subsequently used to generate one or more Service Level Agreement (SLA)-specific service requests. For each SLA-specific service request, a first bidirectional path is instantiated through a core portion of the 5G environment, and is stored as a first SRv6 segment stack. A first SLA-Binding SID (SLA-BSID) is generated in order to associate the first SRv6 segment stack with its SLA-specific service request. A second bidirectional path is then instantiated to connect a Radio Access Network (RAN) to the core portion of the 5G environment, and is stored as a second SRv6 segment stack. The first SLA-BSID is appended as the last segment of the second SRv6 segment stack, and a second SLA-BSID is generated in order to associate the second SRv6 segment stack with the same SLA-specific service request. The second SLA-BSID is transmitted to the originator of the access authentication/NAS signaling message.

### EXAMPLE EMBODIMENTS

In comparison to prior generations of mobile and wireless networks, fifth generation (5G) mobile and wireless networks will provide enhanced mobile broadband communications and deliver a wider range of services and applications than ever before. Unlike prior generation networks, the 5G architecture is service based, meaning that wherever suitable, 5G architecture elements are defined as network functions (NFs) that offer their services to other network functions via common framework interfaces. Many of the services and network functions contemplated in the context of 5G networks are either new or are improvements on existing implementations that have just now been enabled or made cost effective in light of the enhanced functionalities offered by 5G networks.

In the context of the present disclosure, one such example is the disclosed SRv6 functionality that can advantageously be implemented in a 5G mobile user-plane without the need for tunneling (e.g., GTP-U), thereby providing a key optimization to the mobile user-plane. In order to achieve this improved mobile user-plane SRv6 functionality, it is contemplated that limited but relevant segment routing policy information and overlay encapsulation details can be offloaded from one or more control planes participating in the 5G network to a given User Equipment (UE). Additionally, the control planes participating in the 5G network can compile and transmit the necessary segment list(s) to the UE, for example upon successful access authentication of the UE.

Because the segment lists are delivered with one or more associated flow policies, the UE is able to construct a complete Segment Routing Header (SRH) and include it in a desired packet for transmission. Because the UE itself inserts the SRH, and not an on-path node such as a gNB (next generation NodeB) or UPF (User Plane Function) of the 5G network, there is no re-encapsulation and there is no tunneling, which can be undesirable in the mobile user-plane, as mentioned previously. In some embodiments, the UE may also insert additional details such as a timestamp or other monitoring information into the SRH or some other overlay header, such that these additional details can later be used during transmission of the packet to provide service assurance and/or to take necessary actions within or upon the 5G network environment. For example, a timestamp or other monitoring information could be used to provide OAM (Operations, Administration and Management) functionality and telemetry computation in the SRH.

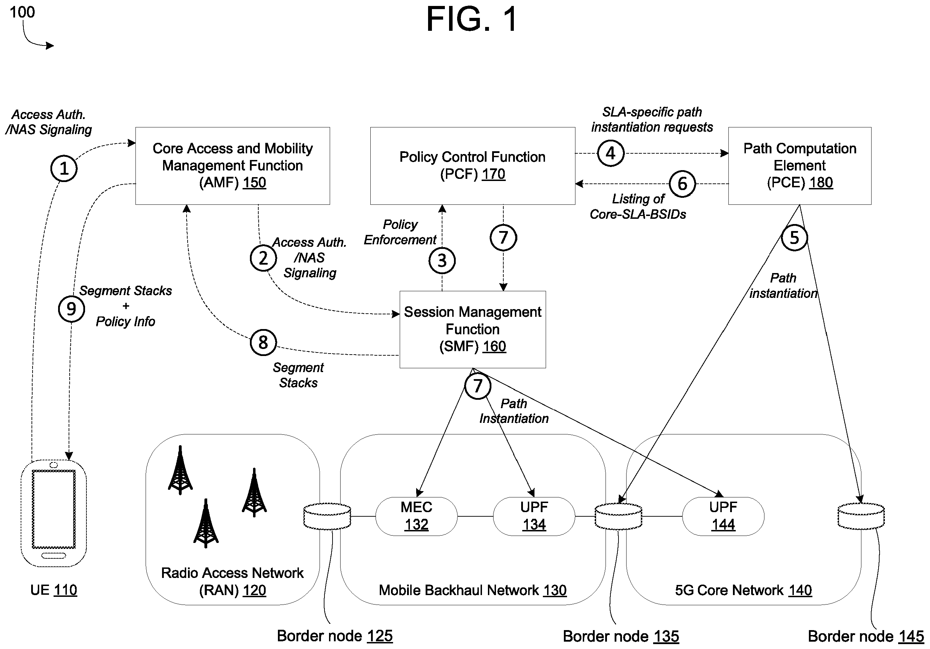

The disclosure turns now to FIG. 1, which depicts an example diagram and process flow 100 for end-to-end cross-layer control plane collaboration for a 5G mobile network environment according to one or more aspects of the present disclosure. It is noted that although a 5G mobile network environment is discussed in the following example, other mobile network environments are compatible with aspects of the present disclosure and the instant example is not intended to be limiting. Additionally, although reference is made in general to a 5G network, it is appreciated that this description encompasses both a full-fledged 5G core (5GC) network as well as a combined 4G/5G Evolved Packet Core (EPC) network, as would be appreciated by one of ordinary skill in the art.

The various constituent components depicted in diagram and process flow 100 can be divided broadly into a set of user plane components and a set of control plane components. For purposes of clarity, user plane components are indicated as rectangles with rounded corners (e.g., 110, 120, 130, 140) and control plane components are indicated as rectangles with 90-degree corners (e.g., 150, 160, 170, 180). As illustrated, there are four user plane components: User Equipment (UE) 110; Radio Access Network (RAN) 120; Mobile Backhaul Network 130; and 5G Core Network 140.

User Equipment (UE) 110 is depicted as a smartphone or mobile computing device, but in general it is contemplated that UE 110 can comprise all manner of devices capable of connecting to or otherwise wirelessly communicating with the 5G mobile network, including but not limited to Internet-of-Things (IoT) devices, connected automobiles, drones, factory equipment with cellular modems, a repeater or extender station, etc. In the context of FIG. 1, UE 110 begins in an unregistered state with respect to the 5G mobile network.

Radio Access Network (RAN) 120 comprises a plurality of discrete radio cells, base stations, towers, or other radio infrastructure elements that are utilized to provide the most immediate and direct wireless connection to various UEs such as UE 110. A first border node 125 is depicted as interconnecting RAN 120 to mobile backhaul network 130, although it is appreciated that a plurality of different first border nodes 125 can be employed without departing from the scope of the present disclosure. For example, rather than using a single first border node 125 to connect all of the discrete infrastructure elements of RAN 120 to mobile backhaul network 130, a number of first border nodes 125 approximately equal to the number of discrete RAN infrastructure elements could utilized.

Mobile backhaul network 130 connects each of the discrete infrastructure elements of RAN 120 to the 5G core network 140, via pathways traversing at least the one or more first border nodes 125, a Multi-access Edge Computing (MEC) network edge 132, one or more User Plane Functions (UPFs) 134, and one or more second border nodes 135. The one or more second border nodes 135 are disposed between the mobile backhaul network 130 and the 5G core network 140 and control ingress and/or egress for the 5G core network 140. In some embodiments, the second border nodes can be similar or identical to one or more of the first border nodes 125. In some embodiments, one or more of the second border nodes 135 can be different than a first border node 125. In general, mobile backhaul network 130 provides a transport pipeline for bidirectional communications traveling between the relatively distributed radio elements of RAN 120 (each element typically having its own unique location, e.g., uniquely located cell towers) and the relatively centralized 5G core network 140.

5G core network 140 implements one or more 5G network core architectures as would be appreciated by one of ordinary skill in the art. As illustrated, 5G core network 140 comprises at least one User Plane Function (UPF) 144, although various other network functions (NFs) can be provided as needed or in accordance with a desired 5G network core architecture. Also shown are one or more third border nodes 145, which can be used, for example, to connect 5G core network 140 to one or more data networks (not shown) such as the Internet. Various ones of the third border nodes 145 can be similar to, identical to, or different from the first border nodes 125 and/or the second border nodes 135.

In addition to these four user plane components described above, FIG. 1 also depicts four control plane components (noting again that control plane components have 90-degree corners in contrast to the rounded corners of the user plane components). The four control plane components include: Core Access and Mobility Management Function (AMF) 150; Session Management Function (SMF) 160; Policy Control Function (PCF) 170; and Path Computation Element (PCE) 180. The functionalities and specific compositions and subcomponents of these four control plane components will be appreciated by one of ordinary skill in the art, and can be provided according to one or more existing 5G mobile network architectures as desired. It is noted again that in Evolved Packet Core (EPC) networks which combine 4G and 5G elements, that one or more of the control plane components might change in accordance with the accepted EPC architecture, e.g., AMF 150 could instead be provided as a Mobility Management Entity (MME).

The disclosure turns now to the illustrated sequential flow presented in diagram 100. Nine different steps are identified as numerals contained within a circle; dotted lines with arrows indicate the parties involved in each step and the direction of the flow between the involved parties. The flow begins with UE 110 in an unregistered state and concludes with UE 110 receiving, from the control plane components, the necessary segment routing information for UE 110 to create a Segment Routing Header (SRH) for various packets it wishes to transmit.

*Step (1):* UE 110 registers with the 5G mobile network by transmitting an access authentication/NAS signaling message to AMF 150. In addition to standard registration information, the access authentication/NAS signaling message includes service information in a Service Descriptor File (SDF), which carries different service requirements for UE 110. For example, service requirements can pertain to one or more of the following: SLA-specific (Service Level Agreement) requests for ultra-low latency, high bandwidth, a certain packet loss sensitivity/threshold, etc; certain network slices or network slice parameters, whether of existing network slices or network slices that must be newly instantiated; various service functions and/or network functions; and various other service requirements as would be appreciated by one of ordinary skill in the art.

In the context of the present example, assume that UE 110 transmits an access authentication/NAS signaling message containing an SDF for an ultra-low latency service and a high bandwidth service.

*Step (2):* Upon receiving the access authentication/NAS signaling message and extracting service information from the SDF, AMF 150 begins the multi-step process of instantiating bi-directional paths for each of the SLA specific service requests that were received from UE 110, e.g., an ultra-low latency path needs to be instantiated and a high-bandwidth path needs to be instantiated. Accordingly, in step (2) AMF 150 sends the access authentication/NAS signaling message to SMF 160.

*Step (3):* Based on the access authentication/NAS signaling message, SMF 160 instructs PCF 170 for policy enforcement.

*Step (4)*: PCF 170 generates a plurality of SLA-specific path instantiation requests corresponding to the service requirement information received from UE 110 in the SDF of the access authentication/NAS signaling message. In the context of the present example, PCF 170 generates an SLA-specific instantiation request for at least an ultra-low latency path and a high-bandwidth path. The SLA-specific path instantiation requests are then transmitted to PCE 180, which is the control plane of 5G core network 140.

*Step (5)*: For each SLA-specific request that it has received, PCE 180 instantiates an SLA-specific bi-directional path through 5G core network 140 for the given SLA requirement or policy. The instantiated paths satisfy all of the stipulated SLA requirements and policies and provide a communicative link from the second border node 135, through 5G core network 140 and UPFs 144, and to the third border node 145 (which, recall, is the egress point from the 5G core network 140 to an external data network like the Internet). In the context of the present example, PCE 180 instantiates at least an ultra-low latency path between second border node 135 and third border node 145, and a high-bandwidth path between second border node 135 and third border node 145.

Once a given SLA-specific path has been instantiated, PCE 180 assigns a Core-SLA-Binding SID (Core-SLA-BSID) on the second border node 135 and associates the Core-SLA-BSID with both the segment stack comprising the SLA-specific path through 5G core network 140 and the SLA requirement corresponding to the SLA-specific path.

Therefore, whenever the second border node 135 interconnecting the backhaul network 130 and the 5G core network 140 receives SRv6 traffic, it will expect the incoming traffic to contain a relevant Core-SLA-BSID as the top segment in its Segment Routing Header (SRH). The second border node 135 can then use this Core-SLA-BSID to identify SLA requirements and policies for the incoming traffic, and then push the relevant segment stack to realize the appropriate SLA-constrained path for the incoming traffic.

*Step (6)*: PCE 180 transmits back to PCF 170 a listing of the Core-SLA-BSIDs for each of the SLA-specific paths that were instantiated as described above in step (5).

*Step (7)*: PCF 170 signals SMF 160 and instantiates relevant bi-directional paths through mobile backhaul network 130 for each of the given SLA-specific requests. Just as in step (5), these instantiated paths satisfy all of the stipulated SLA requirements and policies requested by UE 110 and the path provides a communicative link from first border node 125, through MEC 132 and UPFs 134, and to second border node 135.

Once a given SLA-specific path has been instantiated through mobile backhaul network 130, PCF 170/SMF 160 assigns a Mobile-SLA-BSID on the first border node 125 between RAN 120 and mobile backhaul network 130. This Mobile-SLA-BSID is then associated with both the segment stack comprising the SLA-specific path through mobile backhaul network 130 and the SLA requirement corresponding to the SLA-specific path.

However, in a departure from step (5), for a given SLA requirement, the corresponding Core-SLA-BSID identifying the segment stack for the given SLA-specific path through 5G core network 140 is included as the last segment in the segment stack that is generated to identify the SLA-specific path through mobile backhaul network 130.

Accordingly, step (7) generates a segment stack which specifies a composite SLA-specific path through both mobile backhaul network 130 and 5G core network 140, where the segment stack for the path through the mobile backhaul network 130 is identified by the Mobile-SLA-BSID and the segment stack for the path through the 5G core network 140 is identified by the Core-SLA-BSID.

*Step (8)*: The composite segment stack that has been generated for each SLA requirement/policy (i.e. the segment stack consisting of a Mobile-SLA-BSID and a Core-SLA-BSID plus the intermediate segments) is handed over from SMF 160 to AMF 150.

*Step (9)*: In some embodiments, the composite segment stack that is received at AMF 150 from SMF 160 can already be in a form that is appropriate for transmission to UE 110, in which case AMF 150 can simply forward the composite segment stack directly to UE 110. In some embodiments, AMF 150 can transform the received composite segment stack into an appropriate form for use by UE 110, e.g., AMF 150 applies a transformation in order to generate the segment routing (SR) listing and the associated flow policy, and subsequently forwards both pieces of information to UE 110 in order for the UE to implement SRv6 and generate Segment Routing Headers to attach to its IPv6 packets.

Accordingly, UE 110 is able to seamlessly obtain and maintain accurate segment stack/Segment Routing information without any additional burden being experienced by UE 110 itself or any of the other user plane components of the 5G network environment depicted in FIG. 1. UE 110 need only receive the segment stack information periodically forwarded to it by AMF 150 and to then maintain a few policies for each service or SLA requirement that it has requested.

Advantageously, the use of an overlay mechanism such as SRv6 permits telemetry information to be carried in the Segment Routing Header (SRH) or in some other overlay on a packet transmitted by UE 110. This telemetry information, such as the timestamp mentioned previously, can be extracted at relevant border nodes within the 5G network environment (e.g., such as one or more of the first border nodes 125, second border nodes 135, and third border nodes 145) and analyzed in order to re-instantiate one or more portions of the path/segment stack over a given SLA-constrained path if needed.

Additionally, the use of end-to-end SRv6 and end-to-end segment stacks spanning from at least first border nodes 125 to third border nodes 145 helps instruct the SLA requirement in an end-to-end fashion at the user plane itself (as opposed to the control plane, as is conventional) via the use of SLA-BSIDs such as the Mobile-SLA-BSIDs and the Core-SLA-BSIDs.

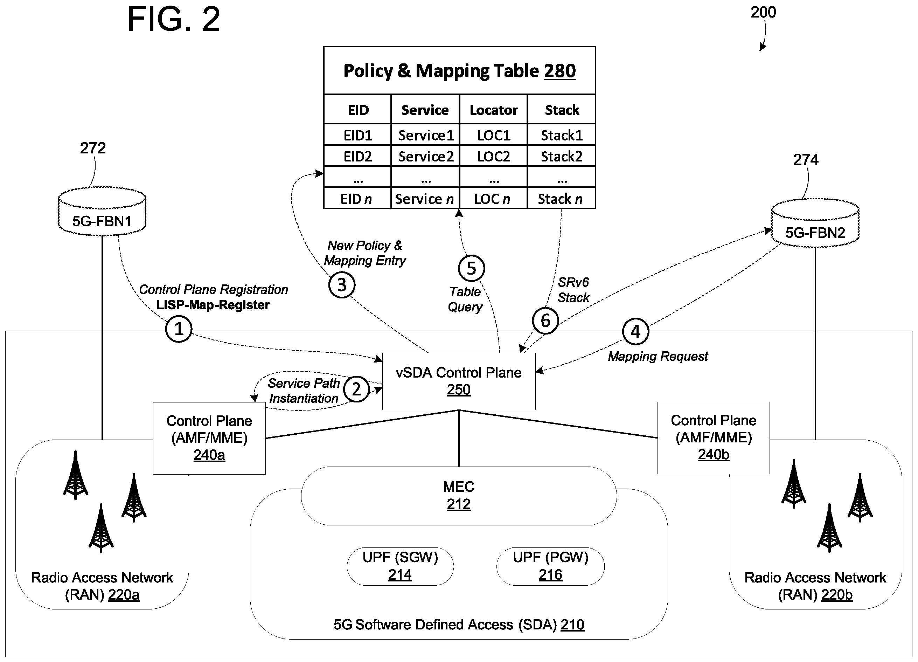

The disclosure turns now to FIG. 2, which depicts an example diagram and process flow 200 for end-to-end cross-layer control plane collaboration for 5G Software Defined Access (SDA). Three user plane components are provided (indicated with rounded edges, as in FIG. 1): a 5G SDA environment 210; a first Radio Access Network (RAN) 220a; and a second RAN 220b. As shown, 5G SDA environment 210 includes a Multi-access Edge Computing (MEC) edge 212, and at least a first UPF 214 configured as a Serving Gateway (SGW) and a second UPF 216 configured as a Packet Gateway (PGW). As would be appreciated by one of ordinary skill in the art, additional components and UPFs can be provided to the 5G SDA environment 210 in accordance with one or more 5G architectures without departing from the scope of the present disclosure.

The first RAN 220a is associated with a first control plane AMF/MME 240a, and the second RAN 220b is associated with a second control plane AMF/MME 240b, in accordance with one or more of the aspects described previously with respect to FIG. 1.

A control plane for the 5G SDA environment 210 is provided as a virtual SDA control plane service 250, which in some embodiments can be instantiated on MEC 212. In some embodiments, vSDA control plane 250 can implement a LISP (Locator/ID Separation Protocol) mapping server or an SRv6 mapping server.

A first fabric border node 5G-FBN1 272 and a second fabric border node 5G-FBN2 274 are provided, and are connected to first RAN 220a and second RAN 220b, respectively. In some embodiments, one or both of the fabric border nodes can request a 5G network slice specific to SDA.

The disclosure turns now to the illustrated sequential flow presented in diagram 200. 6 different steps are identified via numerals contained within a circle; dotted lines with arrows indicate the parties involved in each step and the direction of the flow between the involved parties. For purposes of clarity of explanation, steps (1)-(3) depict the registration of 5G-FBN1 272 with vSDA control plane 250, while steps (4)-(6) depict the propagation of SRv6 and/or SRH information to 5G-FBN2 274. However, it is appreciated that either one of the two fabric border nodes 5G-FBN1 272 and 5G-FBN2 274 can perform all of these steps as desired.

*Step (1):* 5G-FBN1 272 registers with vSDA control plane 250. As shown, this registration processed is performed using LIPS Map-register, although it is appreciated that other registration messages can be used according to the protocol or service architecture implemented by vSDA control plane 250.

*Step (2)*: vSDA control plane 250 performs registration for 5G-FBN1 272, and communicates with the control plane AMF/MME 240a associated with RAN 220a of 5G-FBN1 272 in order to thereby instantiate various end-to-end service paths based on the registration request transmitted by 5G-FBN1 272. This path instantiation process for different services is performed much in the same manner as described previously with respect to FIG. 1.

*Step (3):* vSDA control plane 250 completes the process of instantiating the end-to-end per-service paths and next programs the details of each path into a local policy & mapping table 280. As illustrated, the policy & mapping table 280 includes entries for EID, Service, Locator, and Segment Stack, although it is appreciated that other column headings and entries are possible without departing from the scope of the present disclosure.

The mechanics of cross-control plane collaboration (e.g., between vSDA control plane 250 and the control plane AMF/MMEs 240a,b) functions in a similar or same manner as described previously with respect to FIG. 1.

With a new row entry written into policy & mapping table 280 for each service registered for 5G-FBN1 272, the registration process is complete.

*Step (4):* Turning now to focus on 5G-FBN2 274, this second fabric border node transmits a mapping request to vSDA control plane 250. Although not shown, it is appreciated that 5G-FBN2 274 can previously have registered with vSDA control plane 250 as described immediately above with respect to steps (1)-(3). In general, it is contemplated that 5G-FBN2 274 transmits a mapping request for one or more remote end-points within the overall 5G environment.

*Step (5)*: Upon receipt of the mapping request from 5G-FBN2 274, the vSDA control plane 250 transmits or otherwise performs a corresponding query on policy & mapping table 280.

*Step (6):* In response to the mapping query, policy & mapping table 280 returns a relevant SRv6 stack, including segment list or segment stack information corresponding to the remote end-point for which the mapping request was generated in step (4). vSDA control plane 250 then forwards this SRv6 stack back to 5G-FBN2 274, thereby satisfying the mapping request and enabling 5G-FBN2 274 to transmit packets with Segment Routing Headers (SRHs) based on the collaborative network topology/control plane information that has been seamlessly assembled without requiring direct interaction between 5G-FBN2 274 and all of the control plane components of the 5G network environment or the 5G SDA environment.

In some embodiments, services can be instantiated in MEC 212 and vSDA control plane 250 can be configured to update policy & mapping table 280 with the relevant SLA and/or service-specific stacks that help steer traffic between one or more 5G fabric border nodes (such as 5G-FBN1 272 and 5G-FBN2 274) over a specific path and over one or more of the specific services instantiated in MEC 212.

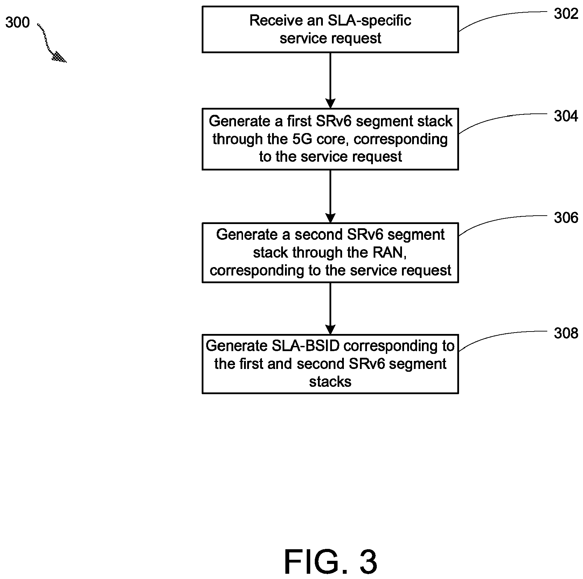

FIG. 3 illustrates an example method 300 according to one or more aspects of the present disclosure, and in some embodiments, in addition to the steps depicted can include one or more steps discussed above.

In a first step 302, one or more SLA-specific service requests are received, most typically from a UE associated with a 5G network. In some embodiments, the SLA-specific service requests can be received as a portion of a registration request and/or access authentication/NAS signaling message transmitted from the UE to the 5G network, or more specifically, transmitted from the UE to an AMF or MME of the 5G network. In some embodiments, at least a portion of the SLA-specific service request information is contained within a Service Descriptor File (SDF) transmitted along with the UE registration request (and/or access authentication/NAS signaling message) to the 5G network. The SDF can specify one or more service requirements for the SLA-specific service requests, e.g. ultra-low latency, high bandwidth, a certain packet loss sensitivity/threshold, etc. In some embodiments, one or more of the SLA-specific service requests can be specific to a particular network slice or set of network slices of the 5G network.

In some embodiments, one or more control plane functions of the 5G network receive the SLA-specific service requests from the AMF/MME and begin the process of performing path instantiation for each of the SLA-specific service requests. These control plane functions of the 5G network can include an SMF, a PCF, and a PCE, although other control plane functions can be utilized without departing from the scope of the present disclosure.

In a step 304, for a given SLA-specific service request, a first SRv6 segment stack is generated through the core portion of the 5G network (also referred to herein as the 5G core). This can include causing the PCE to first perform path instantiation through the 5G core, i.e. instantiating paths between an ingress and egress border node of the 5G core, where the path instantiation is performed such that the various components and stipulations of the SLA-specific service request are all satisfied along the path traversing the 5G core.

In some embodiments, the first SRv6 segment stack is associated with an SLA-BSID, and further, this SLA-BSID can be stored at the ingress border node to the 5G core such that any received traffic having a header containing the same SLA-BSID can automatically be routed along the first SRv6 segment stack.

In a step 306, for the same given SLA-specific service request, a second SRv6 segment stack is generated through the RAN of the 5G network environment. In some embodiments, the second SRv6 segment stack can be generated through the RAN and the mobile backhaul network of the 5G network environment, or the RAN and mobile backhaul network can be combined into a single entity/component of the 5G network environment. The second SRv6 segment stack is generated by first causing the PCF and/or SMF to perform path instantiation through the RAN, in a similar fashion to the path instantiation performed through the 5G core by the PCE as described above, i.e. between an ingress and egress border node of the RAN and satisfying all requirements of the SLA-specific service request. In some embodiments, the egress border node of the RAN can be the same as the ingress border node of the 5G core, or in other words, the RAN and 5G core are communicatively coupled to one another by this border node.

In some embodiments, once the second SRv6 segment stack is appropriately generated, the first SLA-BSID corresponding to the first SRv6 segment stack is appended to the end of the second SRv6 segment stack, recalling that the second SRv6 segment stack terminates at the border node connecting the RAN and the 5G core, and further recalling that the first SLA-BSID is stored at this same border node as an identifier of the first SRv6 segment stack.

In a step 308, a second SLA-BSID is generated and associated with the second SRv6 segment stack. In some embodiments, the second SLA-BSID specifies a composite SLA-specific path through both the RAN/mobile backhaul network and the 5G core, such that it can be utilized by the registering UE from step 302 to generate SRv6 headers for data transmission through the 5G network environment without tunneling. In some embodiments, the second SLA-BSID can be generated via one or more of the PCF and SMF of the control plane of the 5G network environment. In some embodiments, the second SLA-BSID can be assigned at the border node between the RAN and the mobile backhaul network of the 5G network environment, in addition to the first SLA-BSID assigned at the border node between the mobile backhaul network and the 5G core. The process described above can be repeated for every SLA-specific service request that is transmitted by the UE or along with the UE registration request and/or access authentication/NAS signaling message to the 5G network environment. In response, the UE can receive the second SLA-BSID and/or a segment stack for each SLA-specific service request, and can additionally receive, in some embodiments, one or more associated flow policies for SRv6 and/or the specific 5G network environment.

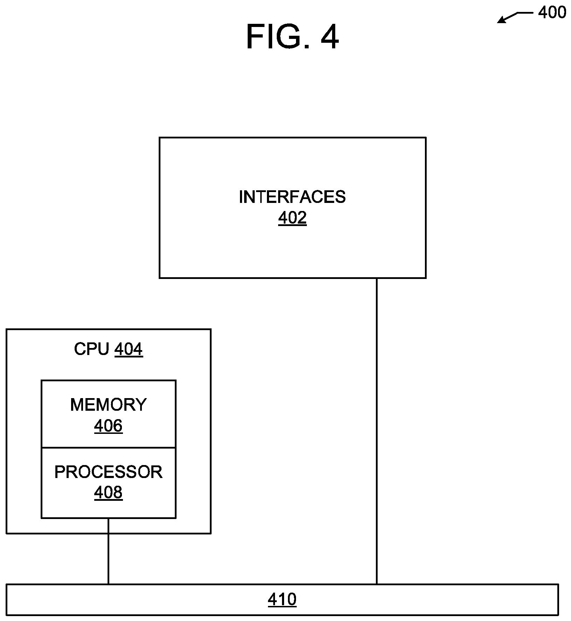

FIG. 4 depicts an example network device upon which one or more aspects of the present disclosure can be implemented. Although the system shown in FIG. 4 is one specific network device of the present disclosure, it is by no means the only network device architecture on which the concepts herein can be implemented. For example, an architecture having a single processor that handles communications as well as routing computations, etc., can be used. Further, other types of interfaces and media could also be used with the network device 400.

Regardless of the network device's configuration, it may employ one or more memories or memory modules (including memory 406) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. Memory 406 could also hold various software containers and virtualized execution environments and data.

The network device 400 can also include an application-specific integrated circuit (ASIC), which can be configured to perform routing, switching, and/or other operations. The ASIC can communicate with other components in the network device 400 via the connection 410, to exchange data and signals and coordinate various types of operations by the network device 400, such as routing, switching, and/or data storage operations, for example.

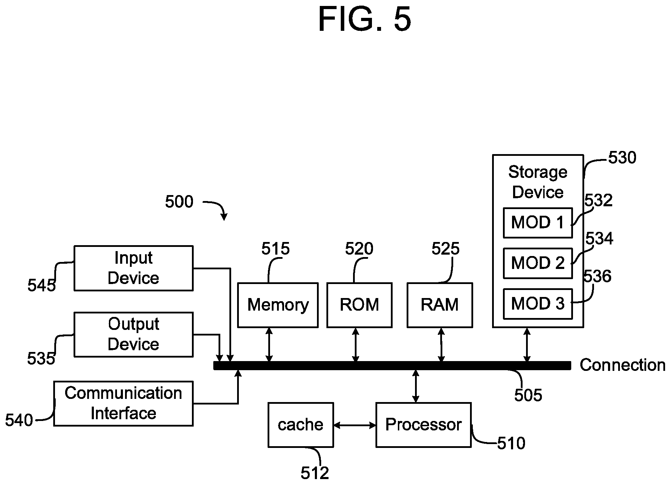

FIG. 5 illustrates an example computing system architecture 500 including components in electrical communication with each other using a connection 505, such as a bus, upon which one or more aspects of the present disclosure can be implemented. System 500 includes a processing unit (CPU or processor) 510 and a system connection 505 that couples various system components including the system memory 515, such as read only memory (ROM) 520 and random access memory (RAM) 525, to the processor 510. The system 500 can include a cache of high-speed memory connected directly with, in close proximity to, or integrated as part of the processor 510. The system 500 can copy data from the memory 515 and/or the storage device 530 to the cache 512 for quick access by the processor 510. In this way, the cache can provide a performance boost that avoids processor 510 delays while waiting for data. These and other modules can control or be configured to control the processor 510 to perform various actions. Other system memory 515 may be available for use as well. The memory 515 can include multiple different types of memory with different performance characteristics. The processor 510 can include any general purpose processor and a hardware or software service, such as service 1 532, service 2 534, and service 3 536 stored in storage device 530, configured to control the processor 510 as well as a special-purpose processor where software instructions are incorporated into the actual processor design. The processor 510 may be a completely self-contained computing system, containing multiple cores or processors, a bus, memory controller, cache, etc. A multi-core processor may be symmetric or asymmetric.

To enable user interaction with the computing device 500, an input device 545 can represent any number of input mechanisms, such as a microphone for speech, a touch-sensitive screen for gesture or graphical input, keyboard, mouse, motion input, speech and so forth. An output device 535 can also be one or more of a number of output mechanisms known to those of skill in the art. In some instances, multimodal systems can enable a user to provide multiple types of input to communicate with the computing device 500. The communications interface 540 can generally govern and manage the user input and system output. There is no restriction on operating on any particular hardware arrangement and therefore the basic features here may easily be substituted for improved hardware or firmware arrangements as they are developed.

Storage device 530 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 525, read only memory (ROM) 520, and hybrids thereof.

The storage device 530 can include services 532, 534, 536 for controlling the processor 510. Other hardware or software modules are contemplated. The storage device 530 can be connected to the system connection 505. In one aspect, a hardware module that performs a particular function can include the software component stored in a computer-readable medium in connection with the necessary hardware components, such as the processor 510, connection 505, output device 535, and so forth, to carry out the function.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method comprising:
receiving, from a user equipment, UE, of a fifth-generation, 5G, network environment, an access authentication message specifying one or more requested services in the 5G network environment;
for each requested service, determining associated service requirements and generating one or more Service Level Agreement, SLA, -specific service requests based on the associated service requirements; and
for each SLA-specific service request:
instantiating a first bidirectional path through a core portion of the 5G network environment;
generating (304) a first Segment Routing for a first IPv6, SRv6, segment stack corresponding to the first bidirectional path;
generating (308) a first SLA-Binding SID, SLA-BSID. associating the first SRv6 segment stack with the SLA-specific service request;
instantiating a second bidirectional path connecting a Radio Access Network (120), RAN, to the core portion of the 5G network environment;
generating (306) a second SRv6 segment stack corresponding to the second bidirectional path;
appending the first SLA-BSID to the second SRv6 segment stack; and
generating (308) a second SLA-BSID associating the second SRv6 segment stack with the SLA-specific service request, and transmitting the second SLA-BSID to the UE (110) in response to a successful access authentication of the UE with the 5G network environment, wherein the UE learns a Segment Routing Header, SRH, policy and segment list for end-to-end SRv6 delivery based on the second SLA-BSID.

2. The method of claim 1, wherein the second bidirectional path is instantiated through a mobile backhaul network (130) communicatively coupled between the RAN and the core portion of the 5G network environment.

3. The method of claim 2, wherein at least a first network border node (125) communicatively couples the mobile backhaul network to the core portion of the 5G network environment and at least a second network border node (135) communicatively couples the mobile backhaul network to the RAN.

4. The method of claim 3, further comprising one or more of:
storing the first SLA-BSID at the first network border node; and
storing the second SLA-BSID at the second network border node.

5. The method of any preceding claim, wherein the SRH policy causes the UE to insert a timestamp or tracking information into a generated SRH header.

6. The method of claim 5, further comprising using the timestamp or tracking information inserted into the generated SRH header in order to perform one or more of an Operations, Administration, and Management, OAM, function and a telemetry computation.

7. The method of any preceding claim, wherein the first SLA-BSID is generated by a control plane of the core portion of the 5G network environment and the second SLA-BSID is generated by a control plane of a mobile backhaul network of the 5G network environment.

8. The method of claim 7, further comprising:
generating a first SRH policy with the control plane of the core portion of the 5G network environment;
generating a second SRH policy with the control plane of the mobile backhaul network;
combining the first and second SRH policy at the mobile control plane of the mobile backhaul network; and
transmitting the combined SRH policy and the second SLA-BSID in response to the received access authentication message.

9. A computer-readable medium having stored therein instructions which, when executed by at least one processor, cause the at least one processor to perform the method of any preceding claim.

## Patentansprüche

1. Ein Verfahren, das Folgendes aufweist:
Empfangen einer Zugangsauthentifizierungsnachricht, von einem Benutzergerät, UE (engl. User equipment), einer Netzwerkumgebung der fünften Generation, 5G, die einen oder mehrere angeforderte Dienste in der 5G-Netzwerkumgebung spezifiziert;
für jeden angeforderten Dienst: Bestimmen zugehöriger Dienstanforderungen und Erzeugen einer oder mehrerer Dienstleistungsvereinbarungen, SLA (Service Level Agreement), -spezifischer Dienstanfragen auf der Grundlage der zugehörigen Dienstanforderungen; und
für jede SLA-spezifische Dienstanforderung:
Instanziieren eines ersten bidirektionalen Pfades durch einen Kernteil der 5G-Netzwerkumgebung;
Erzeugen (304) eines ersten Segment-Routings für einen ersten IPv6, SRv6, Segment-Stack, der dem ersten bidirektionalen Pfad entspricht;
Erzeugen (308) einer ersten SLA-Binding SID, SLA-BSID, die den ersten SRv6-Segmentstapel mit der SLA-spezifischen Dienstanforderung verbindet;
Instanziierung eines zweiten bidirektionalen Pfads, der ein Funkzugangsnetz (120), RAN, mit dem Kernteil der 5G-Netzwerkumgebung verbindet;
Erzeugen (306) eines zweiten SRv6-Segmentstapels entsprechend dem zweiten bidirektionalen Pfad;
Anhängen der ersten SLA-BSID an den zweiten SRv6-Seg-mentstapel; und
Erzeugen (308) einer zweiten SLA-BSID, die den zweiten SRv6-Segmentstapel mit der SLA-spezifischen Dienstanforderung verknüpft, und Übertragen der zweiten SLA-BSID an das UE (110) als Reaktion auf eine erfolgreiche Zugangsauthentifizierung des UE mit der 5G-Netzwerkumgebung, wobei das UE einen Segment-Routing-Header, SRH, eine Richtlinie und eine Segmentliste für eine Ende-zu-Ende-SRv6-Zustellung auf der Grundlage der zweiten SLA-BSID lernt.

2. Das Verfahren nach Anspruch 1, wobei der zweite bidirektionale Pfad durch ein mobiles Backhaul-Netzwerk (130) instanziiert wird, das kommunikativ zwischen dem RAN und dem Kernteil der 5G-Netzwerkumgebung gekoppelt ist.

3. Das Verfahren nach Anspruch 2, wobei mindestens ein erster Netzwerkgrenzknoten (125) das mobile Backhaul-Netzwerk kommunikativ mit dem Kernteil der 5G-Netzwerkumgebung koppelt und mindestens ein zweiter Netzwerkgrenzknoten (135) das mobile Backhaul-Netzwerk kommunikativ mit dem RAN koppelt.

4. Das Verfahren nach Anspruch 3, das ferner eines oder mehrere der folgenden Merkmale aufweist:
Speichern der ersten SLA-BSID an dem ersten Netzgrenzknoten; und
Speichern der zweiten SLA-BSID an dem zweiten Netzgrenzknoten.

5. Das Verfahren nach einem der vorhergehenden Ansprüche, wobei die SRH-Policy das UE veranlasst, einen Zeitstempel oder Tracking-Informationen in einen generierten SRH-Header einzufügen.

6. Das Verfahren nach Anspruch 5 weist ferner die Verwendung des Zeitstempels oder der Verfolgungsinformationen auf, die in den erzeugten SRH-Header eingefügt werden, um eine oder mehrere Betriebs-, Verwaltungs- und Managementfunktionen (OAM engl. Operations, Administration und Managment) und eine Telemetrieberechnung durchzuführen.

7. Das Verfahren nach einem der vorhergehenden Ansprüche, wobei die erste SLA-BSID von einer Steuerebene des Kernteils der 5G-Netzwerkumgebung erzeugt wird und die zweite SLA-BSID von einer Steuerebene eines mobilen Backhaul-Netzwerks der SG-Netzwerkumgebung erzeugt wird.

8. Das Verfahren nach Anspruch 7, das ferner aufweist:
Erzeugen einer ersten SRH-Richtlinie mit der Steuerebene des Kernbereichs der 5G-Netzumgebung;
Erzeugen einer zweiten SRH-Richtlinie mit der Steuerebene des mobilen Backhaul-Netzwerks;
Kombinieren der ersten und zweiten SRH-Richtlinie auf der mobilen Steuerebene des mobilen Backhaul-Netzwerks; und
Übertragen der kombinierten SRH-Richtlinie und der zweiten SLA-BSID als Reaktion auf die empfangene Zugangsauthentifizierungsnachricht.

9. Ein computerlesbares Medium, auf dem Befehle gespeichert sind, die, wenn sie von mindestens einem Prozessor ausgeführt werden, den mindestens einen Prozessor veranlassen, das Verfahren nach einem der vorhergehenden Ansprüche durchzuführen.

## Revendications

1. Procédé comprenant :
la réception, en provenance d'un équipement utilisateur, UE, d'un environnement réseau de cinquième génération, 5G, d'un message d'authentification d'accès spécifiant un ou plusieurs services demandés dans l'environnement réseau 5G ;
pour chaque service demandé, il convient de déterminer des exigences de services associées et de générer une ou plusieurs demandes de services spécifiques à un accord de niveau de service, SLA, en se basant sur les exigences de services associées ; et
pour chaque demande de service spécifique au SLA, il convient :
d'instancier un premier trajet bidirectionnel à travers une partie centrale de l'environnement réseau 5G ;
de générer (304) un premier routage de segments pour un premier empilement de segments IPv6, SRv6 correspondant au premier trajet bidirectionnel ;
de générer (308) un premier SID de liaison du SLA, BSID du SLA, associant le premier empilement de segments SRv6 à la demande de service spécifique au SLA ;
d'instancier un deuxième trajet bidirectionnel connectant un réseau d'accès radio (120), RAN, à la partie centrale de l'environnement réseau 5G ;
de générer (306) un deuxième empilement de segments SRv6 correspondant au deuxième trajet bidirectionnel ;
d'ajouter le premier BSID du SLA au deuxième empilement de segments SRv6 ; et
de générer (308) un deuxième BSID du SLA associant le deuxième empilement de segments SRv6 à la demande de service spécifique au SLA, et il convient de transmettre le deuxième BSID du SLA à l'UE (110), en réponse à une authentification d'accès réussie de l'UE avec l'environnement réseau 5G, procédé dans lequel l'UE apprend une politique d'en-tête de routage de segments, SRH, et une liste de segments pour une distribution SRv6 de bout en bout, en se basant sur le deuxième BSID du SLA.

2. Procédé selon la revendication 1, dans lequel le deuxième trajet bidirectionnel est instancié à travers un réseau d'amenée mobile (130) communicativement couplé entre le RAN et la partie centrale de l'environnement réseau 5G.

3. Procédé selon la revendication 2, dans lequel au moins un premier noeud de bordure de réseau (125) couple communicativement le réseau d'amenée mobile à la partie centrale de l'environnement réseau 5G, et au moins un deuxième noeud de bordure de réseau (135) couple communicativement le réseau d'amenée mobile au RAN.

4. Procédé selon la revendication 3, comprenant en outre l'un ou plusieurs des faits tels que :
le stockage du premier BSID du SLA au niveau du premier noeud de bordure de réseau ; et
le stockage du deuxième BSID du SLA au niveau du deuxième noeud de bordure de réseau.

5. Procédé selon l'une quelconque des revendications précédentes, dans lequel la politique SRH amène l'UE à insérer un horodatage ou des informations de suivi dans un en-tête SRH ayant été généré.

6. Procédé selon la revendication 5, comprenant en outre l'utilisation de l'horodatage ou des informations de suivi ayant été insérés dans l'en-tête SRH ayant été généré, afin de mettre en oeuvre une ou plusieurs des actions telles qu'une fonction d'opérations, d'administration et de gestion, OAM, et un calcul de télémétrie.

7. Procédé selon l'une quelconque des revendications précédentes, dans lequel le premier BSID du SLA est généré par un plan de contrôle de la partie centrale de l'environnement réseau 5G, et le deuxième BSID du SLA est généré par un plan de contrôle d'un réseau d'amenée mobile de l'environnement réseau 5G.

8. Procédé selon la revendication 7, comprenant en outre le fait de :
générer une première politique SRH avec le plan de contrôle de la partie centrale de l'environnement réseau 5G ;
générer une deuxième politique SRH avec le plan de contrôle du réseau d'amenée mobile ;
combiner les première et deuxième politiques SRH au niveau du plan de contrôle mobile du réseau d'amenée mobile ; et
transmettre la politique SRH combinée et le deuxième BSID du SLA, en réponse au message d'authentification d'accès ayant été reçu.

9. Support lisible par ordinateur, ledit support ayant des instructions qui y sont stockées et qui, lorsqu'elles sont exécutées par au moins un processeur, amènent l'au moins un processeur à mettre en oeuvre le procédé selon l'une quelconque des revendications précédentes.
